# EUROPEAN PATENT SPECIFICATION

(11) **EP 3 121 043 B1**
(45) Date of publication and mention of the grant of the patent: **21.11.2018**
(21) Application number: 15764700.9
(22) Date of filing: 20.03.2015
(51) Int. Cl.: B60H 1/04, B60H 1/00, F01P 9/06

(54) **CIRCULATION SYSTEM FOR EXTENDED-RANGE ELECTRIC BUS**
ZIRKULATIONSSYSTEM FÜR BEREICHSERWEITERTEN ELEKTROBUS
SYSTÈME DE CIRCULATION POUR AUTOBUS ÉLECTRIQUE À AUTONOMIE ÉTENDUE

(30) Priority: 21.03.2014 US 201461968766 P
(43) Date of publication of application: 25.01.2017
(73) Proprietor: Aleees Eco Ark (Cayman) Co., Ltd., Grand Cayman KY1-1002 (KY)
(72) Inventor: YANG, Anthony An-Tao, Taoyuan City Taiwan 33449 (TW); CHEN, Gordon Ching, Taoyuan City Taiwan 33449 (TW)
(74) Representative: 2K Patentanwälte Blasberg Kewitz & Reichel
(86) International application number: PCT/CN2015/074803
(87) International publication number: WO 2015/139662

(56) References cited:
- EP-B1- 1 059 182
- WO-A1-2013/190767
- CN-A- 102 529 642
- CN-A- 102 837 619
- CN-A- 103 129 346
- CN-U- 203 046 814
- DE-A1-102010 043 576
- DE-A1-102013 212 837
- US-A- 5 497 941

## Description

### FIELD OF THE INVENTION

The present invention relates to a circulation system of a range-extended electric bus, and more particularly to a temperature circulation system of a power system of a range-extended electric bus. The circulation system controls the direction of a circulation of cooling fluid and powers of each component for changing to a plurality of operation modes according to the temperature of the environment and the system cooling demands.

### BACKGROUND OF THE INVENTION

A cooling method of a range-extended electric bus of prior art utilizes a radiator to volatilize the waste heat, however the cooling power is limited by the temperature of the environment. Under this circumstance, when a large power output is being performed under a hot weather, the temperature of the cooling fluid may be 20 degrees Celsius higher than the ideal operation temperature, easily shortening the lifetimes of the motor driver and the motor system.

Practically, when the temperature of the environment is risen to 35 degrees Celsius, an output temperature of the water of the radiator may be risen to 50-60 degrees Celsius according to the power of the motor. Since the ideal operation temperature of the motor driver is under 40 degrees Celsius, it is easily causing the efficiency decay and unable output, and shortening the lifetime of the motor system.

WO2013190767 (A1) discloses a vehicle heat management system in which a heat medium circuit including a first path and a heat medium circuit including second paths are formed independently of each other by operating a first switching valve and a second switching valve in conjunction with each other so that the paths communicated by the first switching valve and the paths communicated by the second switching valve are the same in a plurality of flow channels constituting a first flow channel group. A heat medium circuit in which the first path and the second paths are communicated in series is formed by operating the first switching valve and the second switching valve in conjunction with each other so that the paths communicated by the first switching valve and the paths communicated by the second switching valve are different in the plurality of flow channels constituting the first flow channel group. It is possible through a simple configuration to switch between forming heat medium circuits that are independent for each of a plurality of paths, and forming heat medium circuits by connecting a plurality of paths to each other.

Therefore, there is a need of providing a technique to keep the cooling power under any weather in order to eliminate the above drawbacks of the power system of the electric bus of prior art.

### SUMMARY OF THE INVENTION

It is an object of the present invention to provide a circulation system of a range-extended electric bus in order to recycle the waste heat generated by a motor and a motor driver of the range-extended electric bus under a cold environment for providing a central heating inside a compartment, and use the cooling power of the air-conditioner system of the electric bus for reducing the operation temperature of a motor system under a hot environment.

The present invention also provides a circulation system of a range-extended electric bus. Two circulation systems are jointly used for operating. The controls of the direction of the circulation, the setting of the four-port flow path switching device, the engine power, the cooling power of the liquid temperature adjustment device, the setting of the compartment heat exchanger and the power of the heat-dissipation device are used for operating in six different operation modes: a normal cooling mode, an auxiliary cooling mode, a low-temperature mode, a high-temperature mode, a medium-temperature mode and a common cooling mode.

In accordance with an aspect of the present invention, there is provided a circulation system of a range-extended electric bus. The circulation system includes cooling fluid, a first flow path, a second flow path, a third flow path, a fourth flow path, a fifth flow path, a sixth flow path, a first flow path switching device, a second flow path switching device and a third flow path switching device. The first flow path includes a compartment heat exchanger. The compartment heat exchanger is used for adjusting the temperature inside a compartment. A first end of the first flow path is connected with a first end of the compartment heat exchanger, and a second end of the first flow path is connected with a second end of the compartment heat exchanger. The second flow path includes a liquid temperature adjustment device and a first pump. The liquid temperature adjustment device is used for controlling the temperature of the cooling fluid outputted from the liquid temperature adjustment device, and the first pump is used for controlling the flow rate of the cooling fluid outputted from the liquid temperature adjustment device. A first end of the second flow path is connected with a first end of the liquid temperature adjustment device, a second end of liquid temperature adjustment device is connected with a first end of the first pump, and a second end of the first pump is connected with a second end of the second flow path. The third flow path includes an engine cooling circuit and a second pump. The engine cooling circuit is used for controlling the temperature of the cooling fluid outputted from the engine cooling circuit, and the second pump is used for controlling the flow rate of the cooling fluid outputted from the engine cooling circuit. A first end of the third flow path is connected with a first end of the engine cooling circuit, a second end of the engine cooling circuit is connected with a first end of the second pump, and a second end of the second pump is connected with a second end of the third flow path. The fourth flow path includes an engine heat-dissipation device. The engine heat-dissipation device is used for adjusting the temperature of an engine, a first end of the fourth flow path is connected with a first end of the engine heat-dissipation device, and a second end of the fourth flow path is connected with a second end of the engine heat-dissipation device. The fifth flow path includes a motor cooling circuit and a third pump. The motor cooling circuit is used for controlling the temperature of the cooling fluid outputted from the motor cooling circuit, and the third pump is used for controlling the flow rate of the cooling fluid outputted from the motor cooling circuit. A first end of the fifth flow path is connected with a first end of the motor cooling circuit, a second end of the motor cooling circuit is connected with a first end of the third pump, and a second end of the fifth flow path is connected with a second end of the third pump. The sixth flow path includes a motor heat-dissipation device. The motor heat-dissipation device is used for adjusting the temperature of a motor, a first end of the sixth flow path is connected with a first end of the motor heat-dissipation device, and a second end of the sixth flow path is connected with a second end of the motor heat-dissipation device. The first flow path switching device is connected with the first end of the first flow path, the second end of the second flow path, the second end of the third flow path and the first end of the fourth flow path for controlling the first end of the first flow path and the first end of the fourth flow path to respectively and selectively connect with the second end of the second flow path and the second end of the third flow path. The second flow path switching device is connected with the first end of the third flow path, the second end of the fourth flow path, the second end of the fifth flow path and the first end of the sixth flow path for controlling the first end of the third flow path and the first end of the sixth flow path to respectively and selectively connect with the second end of the fourth flow path and the second end of the fifth flow path. The third flow path switching device is connected with the first end of the fifth flow path, the second end of the sixth flow path, the second end of the first flow path and the first end of the second flow path for controlling the first end of the fifth flow path and the first end of the second flow path to respectively and selectively connect with the second end of the sixth flow path and the second end of the first flow path. Connections of the first flow path, the second flow path, the third flow path, the fourth flow path, the fifth flow path and the sixth flow path and a circulation of the cooling fluid are controlled by the first flow path switching device, the second flow path switching device and the third flow path switching device, thereby being operated in a plurality of operation modes.

The above contents of the present invention will become more readily apparent to those ordinarily skilled in the art after reviewing the following detailed description and accompanying drawings, in which:

### BRIEF DESCRIPTION OF THE DRAWINGS

FIG. 1 schematically illustrates the configuration of a circulation system of a range-extended electric bus in a normal cooling mode according to a preferred embodiment of the present invention;
FIG. 2 schematically illustrates the configuration of a circulation system of a range-extended electric bus in an auxiliary cooling mode according to a preferred embodiment of the present invention;
FIG. 3 schematically illustrates the configuration of a circulation system of a range-extended electric bus in a low-temperature mode according to a preferred embodiment of the present invention;
FIG. 4 schematically illustrates the configuration of a circulation system of a range-extended electric bus in a high-temperature mode according to a preferred embodiment of the present invention;
FIG. 5 schematically illustrates the configuration of a circulation system of a range-extended electric bus in a medium-temperature mode according to a preferred embodiment of the present invention; and
FIG. 6 schematically illustrates the configuration of a circulation system of a range-extended electric bus in a common cooling mode according to a preferred embodiment of the present invention.

### DETAILED DESCRIPTION OF THE PREFERRED EMBODIMENT

The present invention will now be described more specifically with reference to the following embodiments. It is to be noted that the following descriptions of preferred embodiments of this invention are presented herein for purpose of illustration and description only. It is not intended to be exhaustive or to be limited to the precise form disclosed.

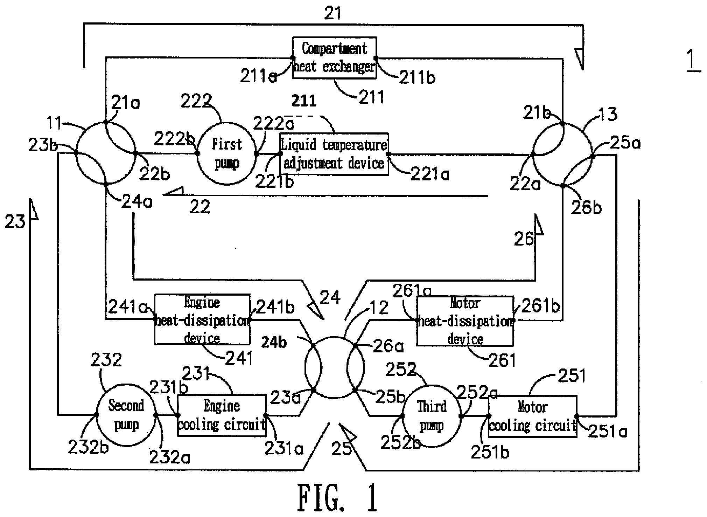

Please refer to FIG. 1. FIG. 1 schematically illustrates the configuration of a circulation system of a range-extended electric bus in a normal cooling mode according to a preferred embodiment of the present invention. A circulation system 1 of a range-extended electric bus includes a first flow path 21, a second flow path 22, a third flow path 23, a fourth flow path 24, a fifth flow path 25 and a sixth flow path 26. The first flow path 21, the second flow path 22, the third flow path 23, the fourth flow path 24, the fifth flow path 25 and the sixth flow path 26, which are not limited to be pipes having liquid flow paths, has cooling fluid inside. The cooling fluid is not limited to water.

The first flow path 21 includes a compartment heat exchanger 211. A first end 21a of the first flow path 21 is connected with a first end 211a of the compartment heat exchanger 211, and a second end 21b of the first flow path 21 is connected with a second end 211b of the compartment heat exchanger 211. The compartment heat exchanger 211 is not limited to a heat exchange being used for reducing or providing the temperature inside a compartment with the cooling fluid. The second flow path 22 includes a liquid temperature adjustment device 221 and a first pump 222. The liquid temperature adjustment device 221 is used for controlling the temperature of the cooling fluid outputted from the liquid temperature adjustment device 221. A first end 22a of the second flow path 22 is connected with a first end 221a of the liquid temperature adjustment device 221, a second end 221b of liquid temperature adjustment device 221 is connected with a first end 222a of the first pump 222, and a second end 222b of the first pump 222 is connected with a second end 22b of the second flow path 22. The liquid temperature adjustment device 221 is not limited to a cold-water supplying device using a refrigerant compression circulation system in order to achieve the purpose of refrigeration.

The third flow path 23 includes an engine cooling circuit 231 and a second pump 232. The engine cooling circuit 231 is used for controlling the temperature of the cooling fluid outputted from the engine cooling circuit 231. A first end 23a of the third flow path 23 is connected with a first end 231a of the engine cooling circuit 231, a second end 231b of the engine cooling circuit 231 is connected with a first end 232a of the second pump 232, and a second end 232b of the second pump 232 is connected with a second end 23b of the third flow path 23. The engine cooling circuit 231 is not limited to a cooling fluid circulation flow path inside a range-extended power generator for conducting the waste heat generated during powering to the cooling fluid, or a fuel battery or a heat pump. The fourth flow path 24 includes an engine heat-dissipation device 241. The engine heat-dissipation device 241 is used for adjusting the temperature of an engine, a first end 24a of the fourth flow path 24 is connected with a first end 241a of the engine heat-dissipation device 241, and a second end 24b of the fourth flow path 24 is connected with a second end 241b of the engine heat-dissipation device 241. The engine heat-dissipation device 241 is not limited to a radiator using the air of the environment to reduce the temperature of the cooling fluid, and is mainly used for cooling the cooling fluid circulated by the engine cooling circuit 231. In addition, the engine cooling circuit 231 and the engine heat-dissipation device 241 can be respectively a fossil fuel boiler and a bypass pipe, simultaneously.

The fifth flow path 25 includes a motor cooling circuit 251 and a third pump 252. The motor cooling circuit 251 is used for controlling the temperature of the cooling fluid outputted from the motor cooling circuit 251. A first end 25a of the fifth flow path 25 is connected with a first end 251a of the motor cooling circuit 251, a second end 251b of the motor cooling circuit 251 is connected with a first end 252a of the third pump 252, and a second end 25b of the fifth flow path 25 is connected with a second end 252b of the third pump 252. The motor cooling circuit 251 is not limited to a cooling circulation flow path circulated in a motor system (not shown) and a motor driver (not shown) for absorbing the waste heat. The sixth flow path 26 includes a motor heat-dissipation device 261. The motor heat-dissipation device 261 is used for adjusting the temperature of a motor, a first end 26a of the sixth flow path 26 is connected with a first end 261a of the motor heat-dissipation device 261, and a second end 26b of the sixth flow path 26 is connected with a second end 261b of the motor heat-dissipation device 261. The motor heat-dissipation device 261 is not limited to a radiator using the air of the environment to reduce the temperature of the cooling fluid, and is mainly used for cooling the cooling fluid circulated by the motor cooling circuit 251.

Moreover, the first pump 222, the second pump 232 and the third pump 252 are not limited to water pumps, the first pump 222 is used for controlling the flow rate of the cooling fluid outputted from the liquid temperature adjustment device 221, the second pump 232 is used for controlling the flow rate of the cooling fluid outputted from the engine cooling circuit 231, and the third pump 252 is used for controlling the flow rate of the cooling fluid outputted from the motor cooling circuit 251.

In this embodiment, the circulation system 1 of the range-extended electric bus further includes a first flow path switching device 11, a second flow path switching device and a third flow path switching device 13. The first flow path switching device 11, the second flow path switching device 12 and the third flow path switching device 13 are not limited to four-port flow path switching devices.

The first flow path switching device 11 is connected with the first end 21a of the first flow path 21, the second end 22b of the second flow path 22, the second end 23b of the third flow path 23 and the first end 24a of the fourth flow path 24 for controlling the first end 21a of the first flow path 21 and the first end 24a of the fourth flow path 24 to respectively and selectively connect with the second end 22b of the second flow path 22 and the second end 23b of the third flow path 23 according to the settings of a user or other requirements. For example, the first end 21a of the first flow path 21 can be controlled to connect with the second end 22b of the second flow path 22 and the first end 24a of the fourth flow path 24 can be controlled to connect with the second end 23b of the third flow path 23 by the first flow path switching device 11, or the first end 21a of the first flow path 21 can be controlled to connect with the second end 23b of the third flow path 23 and the first end 24a of the fourth flow path 24 can be controlled to connect with the second end 22b of the second flow path 22 by the first flow path switching device 11.

The second flow path switching device 12 is connected with the first end 23a of the third flow path 23, the second end 24b of the fourth flow path 24, the second end 25b of the fifth flow path 25 and the first end 26a of the sixth flow path 26 for controlling the first end 23a of the third flow path 23 and the first end 26a of the sixth flow path 26 to respectively and selectively connect with the second end 24b of the fourth flow path 24 and the second end 25b of the fifth flow path 25 according to the settings of a user or other requirements. For example, the first end 23a of the third flow path 23 can be controlled to connect with the second end 24b of the fourth flow path 24 and the first end 26a of the sixth flow path 26 can be controlled to connect with the second end 25b of the fifth flow path 25 by the second flow path switching device 12, or the first end 23a of the third flow path 23 can be controlled to connect with the second end 25b of the fifth flow path 25 and the first end 26a of the sixth flow path 26 can be controlled to connect with the second end 24b of the fourth flow path 24 by the second flow path switching device 12.

The third flow path switching device 13 is connected with the first end 25a of the fifth flow path 25, the second end 26b of the sixth flow path 26, the second end 21b of the first flow path 21 and the first end 22a of the second flow path 22 for controlling the first end 25a of the fifth flow path 25 and the first end 22a of the second flow path 22 to respectively and selectively connect with the second end 26b of the sixth flow path 26 and the second end 21b of the first flow path 21 according to the settings of a user or other requirements. For example, the first end 25a of the fifth flow path 25 can be controlled to connect with the second end 26b of the sixth flow path 26 and the first end 22a of the second flow path 22 can be controlled to connect with the second end 21b of the first flow path 21 by the third flow path switching device 13, or the first end 25a of the fifth flow path 25 can be controlled to connect with the second end 21b of the first flow path 21 and the first end 22a of the second flow path 22 can be controlled to connect with the second end 26b of the sixth flow path 26 by the third flow path switching device 13.

In the circulation system 1 of the range-extended electric bus of the present invention, not only connections of the first flow path 21, the second flow path 22, the third flow path 23, the fourth flow path 24, the fifth flow path 25 and the sixth flow path 26, but also a circulation of the cooling fluid inside the circulation paths are controlled by the first flow path switching device 11, the second flow path switching device 12 and the third flow path switching device 13, such that the circulation system 1 of the range-extended electric bus is operated in a plurality of operation modes. The operation modes include but not limited to a normal cooling mode, an auxiliary cooling mode, a low-temperature mode, a high-temperature mode, a medium-temperature mode and a common cooling mode illustrated as follows.

Please refer to FIG. 1 again. When the circulation system 1 of the range-extended electric bus of this embodiment is operated in the normal cooling mode, the first end 21a of the first flow path 21 is controlled to connect with the second end 22b of the second flow path 22 and the second end 23b of the third flow path 23 is controlled to connect with the first end 24a of the fourth flow path 24 by the first flow path switching device 11, the first end 23a of the third flow path 23 is controlled to connect with the second end 24b of the fourth flow path 24 and the second end 25b of the fifth flow path 25 is controlled to connect with the first end 26a of the sixth flow path 26 by the second flow path switching device 12, and the first end 25a of the fifth flow path 25 is controlled to connect with the second end 26b of the sixth flow path 26 and the second end 21b of the first flow path 21 is controlled to connect with the first end 22a of the second flow path 22 by the third flow path switching device 13. Three cycling loops are formed by the circulation system 1 of the range-extended electric bus. The first cycling loop is consisted of the first flow path 21 and the second flow path 22. The first pump 222 is used for circulating the cooling fluid in the compartment heat exchanger 211 and the liquid temperature adjustment device 221. The second cycling loop is consisted of the third flow path 23 and the fourth flow path 24. The second pump 232 is used for circulating the cooling fluid in the engine cooling circuit 231 and the engine heat-dissipation device 241. The third cycling loop is consisted of the fifth flow path 25 and the sixth flow path 26. The third pump 252 is used for circulating the cooling fluid in the motor cooling circuit 251 and the motor heat-dissipation device 261.

When the range-extended electric bus is operated in an environment with a moderate temperature, the circulation system 1 of the range-extended electric bus is adjusted as the circulation settings shown in FIG. 1 for operating in the normal cooling mode. The liquid temperature adjustment device 221 provides the cooling fluid with low temperature to the compartment heat exchanger 211 for cooling the air inside the compartment according to the demands of the user. The engine cooling circuit 231 and the engine heat-dissipation device 241 circulate the cooling fluid when the engine is enable for being charged, so that the engine may be capable of heat-dissipation through the circulation of the cooling fluid. The cooling fluid with high temperature in the motor cooling circuit 251 is guided to the motor heat-dissipation device 261 for as much as possible keeping the low-temperature circulation in order to ensure the efficiencies of the motor system and the motor driver.

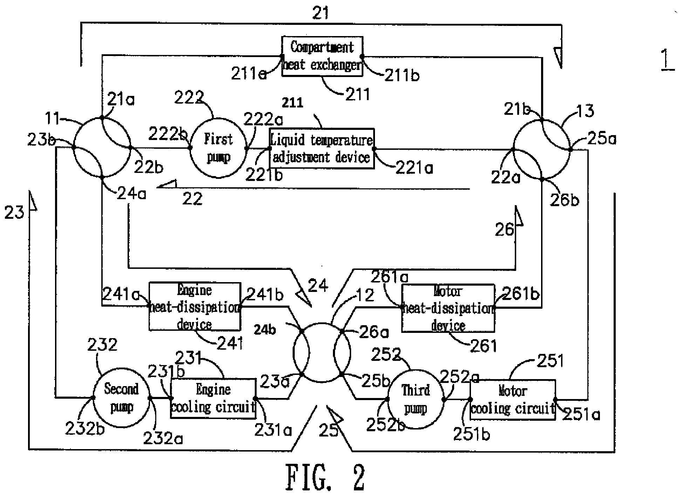

Please refer to FIG. 2. FIG. 2 schematically illustrates the configuration of a circulation system of a range-extended electric bus in an auxiliary cooling mode according to a preferred embodiment of the present invention. When the circulation system 1 of the range-extended electric bus of this embodiment is operated in the auxiliary cooling mode, the first end 21a of the first flow path 21 is controlled to connect with the second end 22b of the second flow path 22 and the second end 23b of the third flow path 23 is controlled to connect with the first end 24a of the fourth flow path 24 by the first flow path switching device 11, the first end 23a of the third flow path 23 is controlled to connect with the second end 24b of the fourth flow path 24 and the second end 25b of the fifth flow path 25b is controlled to connect with the first end 26a of the sixth flow path 26 by the second flow path switching device 12, and the first end 22a of the second flow path 22 is controlled to connect with the second end 26b of the sixth flow path 26 and the second end 21b of the first flow path 21 is controlled to connect with the first end 25a of the fifth flow path 25 by the third flow path switching device 13, such that two cycling loops are formed by the circulation system 1 of the range-extended electric bus. The first cycling loop is consisted of the first flow path 21, the second flow path 22, the fifth flow path 25 and the sixth flow path 26. The first pump 222 and the third pump 252 are used for circulating the cooling fluid around the compartment heat exchanger 211, the liquid temperature adjustment device 221, the motor cooling circuit 251 and the motor heat-dissipation device 261, so that the cooling fluid, which absorbs the waste heat of the motor cooling circuit 251, with high temperature can be cooled by the motor heat-dissipation device 261, and then cooled by the liquid temperature adjustment device 221, circulated over the compartment heat exchanger 211 for providing the air-condition, and finally circulated back to the motor cooling circuit 251. No matter whether the temperature of the environment is too high or not, the input temperature of the cooling fluid toward the motor cooling circuit 251 can be controlled at an ideal operation temperature. In the second cycling loop, the second pump 232 is used for circulating the cooling fluid between the engine cooling circuit 231 and the engine heat-dissipation device 241.

When the temperature of the environment is risen or the waste heat of the motor system is too much, causing that the motor system cannot be kept at an ideal operation temperature, the circulation system 1 of the range-extended electric bus is adjusted as the circulation settings shown in FIG. 2 for operating in the auxiliary cooling mode. In the auxiliary cooling mode, when the cooling fluid, which absorbs the waste heat, with high temperature in the motor cooling circuit 251 is guided to the liquid temperature adjustment device 221, the heat is effectively absorbed through the refrigerant compression circulation system, so that the temperature of the cooling fluid is lower than the temperature of the environment. The cooling fluid is then circulated back to the motor cooling circuit 251 through the third flow path switching device 13, so that the input temperature of the cooling fluid toward the motor cooling circuit 251 is kept at a low temperature for protecting the motor system and the motor driver. Even if the temperature of the environment is risen to 40 degrees Celsius, the temperature-controlling manner of the auxiliary cooling mode may much more ensure that the motor system can be operated at a temperature between 20 to 40 degrees Celsius in comparison with a conventional temperature-controlling manner of prior art. Therefore, the motor system and the motor driver can be long-term stable.

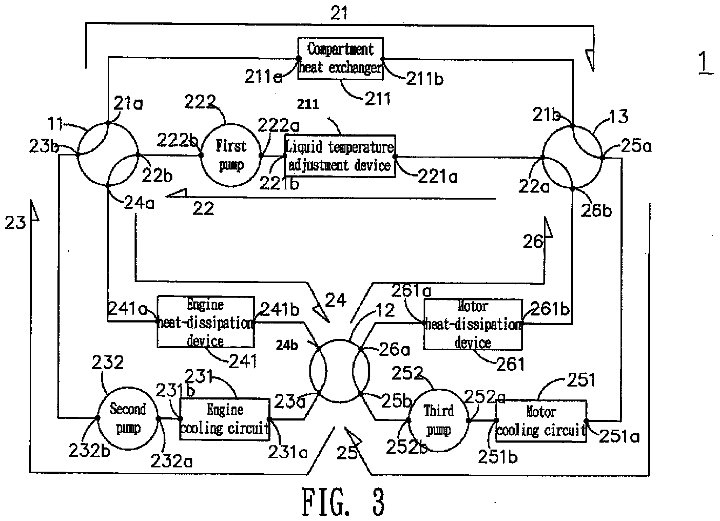

Please refer to FIG. 3. FIG. 3 schematically illustrates the configuration of a circulation system of a range-extended electric bus in a low-temperature mode according to a preferred embodiment of the present invention. When the circulation system 1 of the range-extended electric bus of this embodiment is operated in the low-temperature mode, the first end 21a of the first flow path 21 is controlled to connect with the second end 23b of the third flow path 23 and the second end 22b of the second flow path 22 is controlled to connect with the first end 24a of the fourth flow path 24 by the first flow path switching device 11, the first end 23a of the third flow path 23 is controlled to connect with the second end 24b of the fourth flow path 24 and the second end 25b of the fifth flow path 25 is controlled to connect with the first end 26a of the sixth flow path 26 by the second flow path switching device 12, and the first end 22a of the second flow path 22 is controlled to connect with the second end 26b of the sixth flow path 26 and the second end 21b of the first flow path 21 is controlled to connect with the first end 25a of the fifth flow path 25 by the third flow path switching device 13, such that a cycling loop is formed by the circulation system 1 of the range-extended electric bus. In this cycling loop, the cooling fluid with high temperature outputted from the motor cooling circuit 251 is circulated through the motor heat-dissipation device 261, the liquid temperature adjustment device 221, the engine heat-dissipation device 241 so as to be cooled. The cooled cooling fluid is guided to the engine cooling circuit 231 so as to be heated, then volatilized with the waste heat for providing the central heating in the compartment heat exchanger 211, and finally circulated back to the motor cooling circuit 251. At this time, the waste heat can be volatilized by the motor heat-dissipation device 261, the engine heat-dissipation device 241 and the compartment heat exchanger 211. In this mode, a portion of the waste heat is utilized for providing the central heating inside the compartment. The liquid temperature adjustment device 221 is shut down in this mode without providing refrigeration.

When the temperature of the environment is lowered, the circulation system 1 of the range-extended electric bus can be adjusted as the circulation settings shown in FIG. 3 for operating in the low-temperature mode. The cooling fluid, which absorbs the waste heat, in the motor cooling circuit 251 and the engine cooling circuit 231 can be guided into the compartment heat exchanger 211 for generating the central heating. The motor heat-dissipation device 261 and the engine heat-dissipation device 241 jointly operate for keeping the cooling fluid at an ideal operation temperature.

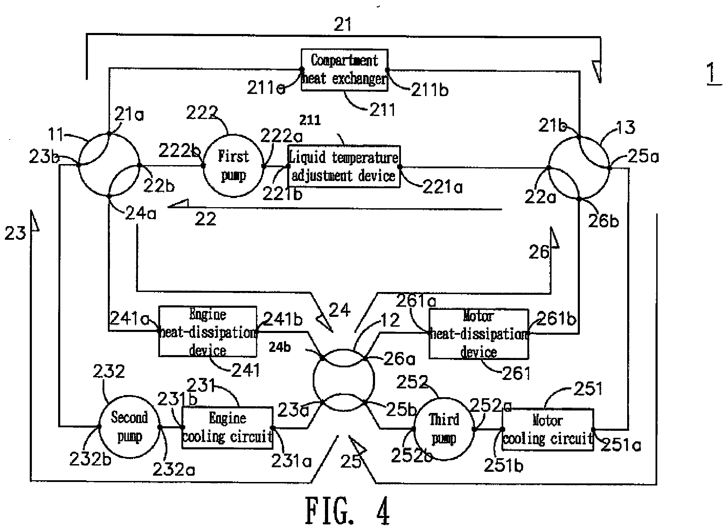

Please refer to FIG. 4. FIG. 4 schematically illustrates the configuration of a circulation system of a range-extended electric bus in a high-temperature mode according to a preferred embodiment of the present invention. When the circulation system 1 of the range-extended electric bus of this embodiment is operated in the high-temperature mode, the first end 21a of the first flow path 21 is controlled to connect with the second end 23b of the third flow path 23 and the second end 22b of the second flow path 22 is controlled to connect with the first end 24a of the fourth flow path 24 by the first flow path switching device 11, the first end 23a of the third flow path 23 is controlled to connect with the second end 25b of the fifth flow path 25 and the second end 24b of the fourth flow path 24 is controlled to connect with the first end 26a of the sixth flow path 26 by the second flow path switching device 12, and the first end 22a of the second flow path 22 is controlled to connect with the second end 26b of the sixth flow path 26 and the second end 21b of the first flow path 21 is controlled to connect with the first end 25a of the fifth flow path 25 by the third flow path switching device 13, such that two cycling loops are formed by the circulation system 1 of the range-extended electric bus. In the first cycling loop, the cooling fluid with high temperature outputted from the motor cooling circuit 251 is guided to the engine cooling circuit 231 for second-time heating, then guided into the compartment heat exchanger 211 so as to be heat-dissipated for providing the central heating, and finally circulated back to the motor cooling circuit 251. The second cycling loop is a loop in a shutdown state that includes the motor heat-dissipation device 261, the engine heat-dissipation device 241 and the liquid temperature adjustment device 221. In this high-temperature mode, all of the waste heat absorbed in the motor cooling circuit 251 and the engine cooling circuit 231 is used by the compartment heat exchanger 211 for heating, so that the waste heat is completely used for providing the central heating in the compartment.

When the temperature of the environment is extremely low, the circulation system 1 of the range-extended electric bus, which needs the highest heating power for providing the central heating, can be adjusted as the circulation settings shown in FIG. 4 for operating in the high-temperature mode. In this mode, the cooling fluid, which absorbs the waste heat, in the motor cooling circuit 251 and the engine cooling circuit 231 is only guided into the compartment heat exchanger 211 to be volatilized for generating the central heating. The motor heat-dissipation device 261, the liquid temperature adjustment device 221 and the engine heat-dissipation device 241 are isolated in the other cycling loop. At this time, the heating power of the compartment heat exchanger 211 has to be highest for ensuring the input temperature of the motor cooling circuit 251 and the engine cooling circuit 231 at an available range of operation temperature.

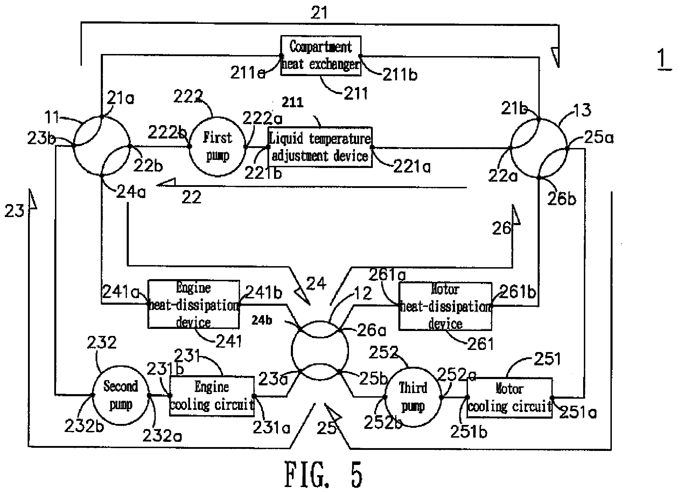

Please refer to FIG. 5. FIG. 5 schematically illustrates the configuration of a circulation system of a range-extended electric bus in a medium-temperature mode according to a preferred embodiment of the present invention. When the circulation system 1 of the range-extended electric bus of this embodiment is operated in the medium-temperature mode, the first end 21a of the first flow path 21 is controlled to connect with the second end 23b of the third flow path 23 and the second end 22b of the second flow path 22 is controlled to connect with the first end 24a of the fourth flow path 24 by the first flow path switching device 11, the first end 23a of the third flow path 23 is controlled to connect with the second end 25b of the fifth flow path 25 and the second end 24b of the fourth flow path 24 is controlled to connect with the first end 26a of the sixth flow path 26 by the second flow path switching device 12, and the first end 25a of the fifth flow path 25 is controlled to connect with the second end 26b of the sixth flow path 26 and the second end 21b of the first flow path 21 is controlled to connect with the first end 22a of the second flow path 22 by the third flow path switching device 13, such that a cycling loop is formed by the circulation system 1 of the range-extended electric bus. In this cycling loop, the cooling fluid, which firstly absorbs the waste heat in the motor cooling circuit 251 and the engine cooling circuit 231, is guided into the compartment heat exchanger 211 to be volatilized for providing the central heating, then sequentially guided into the liquid temperature adjustment device 221, the engine heat-dissipation device 241, the motor heat-dissipation device 261 to be cooled for adjusting the temperature of the cooling fluid, and finally circulated back to the motor cooling circuit 251. In comparison with the high-temperature mode shown in FIG. 4, the heating power provided in the medium-temperature mode is lower, however the temperature of the cooling fluid is easier to be kept at an ideal operation temperature.

When the temperature of the environment is low, the circulation system 1 of the range-extended electric bus, which needs higher heating power and higher power output, can be adjusted as the circulation settings shown in FIG. 5 for operating in the medium-temperature mode. In this mode, the cooling fluid, which absorbs the waste heat, in the motor cooling circuit 251 and the engine cooling circuit 231 is firstly guided into the compartment heat exchanger 211 to be volatilized for generating the central heating, and then guided to the motor heat-dissipation device 261 and the engine heat-dissipation device 241 for adjusting the input temperature of the cooling fluid toward the motor cooling circuit 251, thereby ensuring to provide a large amount of the central heating and keep the motor system in an available system state for providing high load anytime, simultaneously.

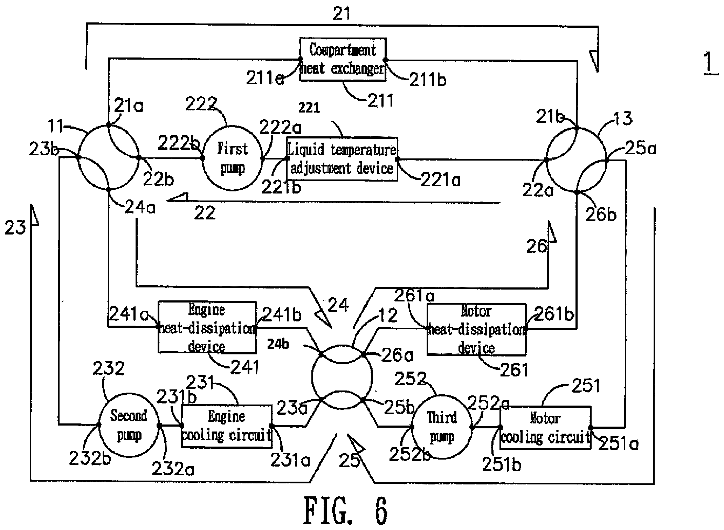

Please refer to FIG. 6. FIG. 6 schematically illustrates the configuration of a circulation system of a range-extended electric bus in a common cooling mode according to a preferred embodiment of the present invention. When the circulation system 1 of the range-extended electric bus of this embodiment is operated in the common cooling mode, the first end 21a of the first flow path 21 is controlled to connect with the second end 22b of the second flow path 22 and the second end 23b of the third flow path 23 is controlled to connect with the first end 24a of the fourth flow path 24 by the first flow path switching device 11, the first end 23a of the third flow path 23 is controlled to connect with the second end 25b of the fifth flow path 25 and the second end 24b of the fourth flow path 24 is controlled to connect with the first end 26a of the sixth flow path 26 by the second flow path switching device 12, and the first end 25a of the fifth flow path 25 is controlled to connect with the second end 26b of the sixth flow path 26 and the second end 21b of the first flow path 21 is controlled to connect with the first end 22a of the second flow path 22 by the third flow path switching device 13, such that two cycling loops are formed by the circulation system 1 of the range-extended electric bus. In the first cycling loop, the engine is in a shutdown state, so there is no thermal energy distributed by the engine cooling circuit 231. Therefore, the waste heat is firstly absorbed by the cooling fluid in the motor cooling circuit 251, then the cooling fluid is guided into the engine heat-dissipation device 241, and then further guided into the motor heat-dissipation device for heat-dissipation. In the second cycling loop, the cooling fluid is circulated between the liquid temperature adjustment device 221 and the compartment heat exchanger 211 for providing air-condition in the compartment.

When the temperature of the environment is high but the engine is not operating, the circulation system 1 of the range-extended electric bus, can be adjusted as the circulation settings shown in FIG. 6 for operating in the common cooling mode. In this mode, the cooling fluid, which absorbs the waste heat in the motor cooling circuit 251, can be heat-dissipated with the engine heat-dissipation device 241 and the motor heat-dissipation device 261, so that a circulation temperature of the cooling fluid may get lower and be more stable.

From the above descriptions, in a circulation system of a range-extended electric bus of the present invention, connections of the first flow path, the second flow path, the third flow path, the fourth flow path, the fifth flow path and the sixth flow path and a circulation of the cooling fluid are controlled by the first flow path switching device, the second flow path switching device and the third flow path switching device in order to recycle the waste heat generated by a motor and a motor driver of the range-extended electric bus under a cold environment for providing a central heating inside a compartment, and use the cooling power of the air-conditioner system of the electric bus for reducing the operation temperature of a motor system under a hot environment. In addition, by controlling the circulation flow path of the cooling fluid and the settings of the flow path switching devices, the circulation system of the range-extended electric bus of the present invention can be operated in a plurality of operation modes, such that the circulation system of the range-extended electric bus can satisfy different environment conditions and meet different internal demands for enhancing the efficiency of utilization of internal waste heat and external temperature.

## Claims

1. A circulation system (1) of a range-extended electric bus, comprising:
cooling fluid;
**characterized by**
a first flow path (21) comprising a compartment heat exchanger (211), wherein the compartment heat exchanger is used for adjusting the temperature inside a compartment, a first end (21a) of the first flow path is connected with a first end of the compartment heat exchanger (221a), and a second end (21b) of the first flow path is connected with a second end (221b) of the compartment heat exchanger;
a second flow path (22) comprising a liquid temperature adjustment device (221) and a first pump (222), wherein the liquid temperature adjustment device is used for controlling the temperature of the cooling fluid outputted from the liquid temperature adjustment device, and the first pump is used for controlling the flow rate of the cooling fluid outputted from the liquid temperature adjustment device, and wherein a first end (22a) of the second flow path is connected with a first end (221a) of the liquid temperature adjustment device, a second end (221b) of liquid temperature adjustment device is connected with a first end (222a) of the first pump, and a second end (222b) of the first pump is connected with a second end (22b) of the second flow path;
a third flow path (23) comprising an engine cooling circuit (231) and a second pump (232), wherein the engine cooling circuit is used for controlling the temperature of the cooling fluid outputted from the engine cooling circuit, and the second pump is used for controlling the flow rate of the cooling fluid outputted from the engine cooling circuit, and wherein a first end (23a) of the third flow path is connected with a first end (231a) of the engine cooling circuit, a second end (231b) of the engine Cooling circuit is connected with a first end (232a) of the second pump, and a second end (232b) of the second pump is connected with a second end (23b) of the third flow path;
a fourth flow path (24) comprising an engine heat-dissipation device (241), wherein the engine heat-dissipation device is used for adjusting the temperature of an engine, a first end (241a) of the fourth flow path (24) is connected with a first end (241a) of the engine heat-dissipation device, and a second end (24b) of the fourth flow path (24) is connected with a second end (241b) of the engine heat-dissipation device;
a fifth flow path (25) comprising a motor cooling circuit (251) and a third pump (252), wherein the motor cooling circuit is used for controlling the temperature of the cooling fluid outputted from the motor cooling circuit, and the third pump is used for controlling the flow rate of the cooling fluid outputted from the motor cooling circuit, and wherein a first end (25a) of the fifth flow path is connected with a first end (251a) of the motor cooling circuit, a second end (251b) of the motor cooling circuit is connected with a first end (252a) of the third pump, and a second end (25b) of the fifth flow path (25) is connected with a second end (252b) of the third pump;
a sixth flow path (26) comprising a motor heat-dissipation device (261), wherein the motor heat-dissipation device is used for adjusting the temperature of a motor, a first end (26a) of the sixth flow path (26) is connected with a first end (261a) of the motor heat-dissipation device, and a second end (26b) of the sixth flow path is connected with a second end (261b) of the motor heat-dissipation device;
a first flow path switching device (11) connected with the first end of the first flow path, the second end of the second flow path, the second end of the third flow path and the first end of the fourth flow path for controlling the first end of the first flow path and the first end of the fourth flow path to respectively and selectively connect with the second end of the second flow path and the second end of the third flow path;
a second flow path switching device (12) connected with the first end of the third flow path, the second end of the fourth flow path, the second end of the fifth flow path and the first end of the sixth flow path for controlling the first end of the third flow path and the first end of the sixth flow path to respectively and selectively connect with the second end of the fourth flow path and the second end of the fifth flow path; and
a third flow path switching device (13) connected with the first end of the fifth flow path, the second end of the sixth flow path, the second end of the first flow path and the first end of the second flow path for controlling the first end of the fifth flow path and the first end of the second flow path to respectively and selectively connect with the second end of the sixth flow path and the second end of the first flow path,
wherein connections of the first flow path, the second flow path, the third flow path, the fourth flow path, the fifth flow path and the sixth flow path and a circulation of the cooling fluid are controlled by the first flow path switching device, the second flow path switching device and the third flow path switching device, thereby being operated in a plurality of operation modes.

2. The circulation system of the range-extended electric bus according to claim 1, wherein the operation modes include a normal cooling mode, and wherein in the normal cooling mode, the first end of the first flow path is controlled to connect with the second end of the second flow path and the second end of the third flow path is controlled to connect with the first end of the fourth flow path by the first flow path switching device, the first end of the third flow path is controlled to connect with the second end of the fourth flow path and the second end of the fifth flow path is controlled to connect with the first end of the sixth flow path by the second flow path switching device, and the first end of the fifth flow path is controlled to connect with the second end of the sixth flow path and the second end of the first flow path is controlled to connect with the first end of the second flow path by the third flow path switching device.

3. The circulation system of the range-extended electric bus according to claim 1, wherein the operation modes include an auxiliary cooling mode, and wherein in the auxiliary cooling mode, the first end of the first flow path is controlled to connect with the second end of the second flow path and the second end of the third flow path is controlled to connect with the first end of the fourth flow path by the first flow path switching device, the first end of the third flow path is controlled to connect with the second end of the fourth flow path and the second end of the fifth flow path is controlled to connect with the first end of the sixth flow path by the second flow path switching device, and the first end of the second flow path is controlled to connect with the second end of the sixth flow path and the second end of the first flow path is controlled to connect with the first end of the fifth flow path by the third flow path switching device, so that the cooling fluid outputted from the motor cooling circuit is received and cooled by the liquid temperature adjustment device.

4. The circulation system of the range-extended electric bus according to claim 1, wherein the operation modes include a low-temperature mode, and wherein in the low-temperature mode, the first end of the first flow path is controlled to connect with the second end of the third flow path and the second end of the second flow path is controlled to connect with the first end of the fourth flow path by the first flow path switching device, the first end of the third flow path is controlled to connect with the second end of the fourth flow path and the second end of the fifth flow path is controlled to connect with the first end of the sixth flow path by the second flow path switching device, and the first end of the second flow path is controlled to connect with the second end of the sixth flow path and the second end of the first flow path is controlled to connect with the first end of the fifth flow path by the third flow path switching device, so that the cooling fluid outputted from the engine cooling circuit is received and cooled by the compartment heat exchanger.

5. The circulation system of the range-extended electric bus according to claim 1, wherein the operation modes include a high-temperature mode, and wherein in the high-temperature mode, the first end of the first flow path is controlled to connect with the second end of the third flow path and the second end of the second flow path is controlled to connect with the first end of the fourth flow path by the first flow path switching device, the first end of the third flow path is controlled to connect with the second end of the fifth flow path and the second end of the fourth flow path is controlled to connect with the first end of the sixth flow path by the second flow path switching device, and the first end of the second flow path is controlled to connect with the second end of the sixth flow path and the second end of the first flow path is controlled to connect with the first end of the fifth flow path by the third flow path switching device, so that a waste heat of the motor cooling circuit and the engine cooling circuit is heat-dissipated by the compartment heat exchanger.

6. The circulation system of the range-extended electric bus according to claim 1, wherein the operation modes include a medium-temperature mode, and wherein in the medium-temperature mode, the first end of the first flow path is controlled to connect with the second end of the third flow path and the second end of the second flow path is controlled to connect with the first end of the fourth flow path by the first flow path switching device, the first end of the third flow path is controlled to connect with the second end of the fifth flow path and the second end of the fourth flow path is controlled to connect with the first end of the sixth flow path by the second flow path switching device, and the first end of the fifth flow path is controlled to connect with the second end of the sixth flow path and the second end of the first flow path is controlled to connect with the first end of the second flow path by the third flow path switching device, so that the cooling fluid in the motor cooling circuit and the engine cooling circuit is circulated in the compartment heat exchanger, the liquid temperature adjustment device, the engine heat-dissipation device and the motor cooling circuit.

7. The circulation system of the range-extended electric bus according to claim 1, wherein the operation modes include a common cooling mode, and wherein in the common cooling mode, the first end of the first flow path is controlled to connect with the second end of the second flow path and the second end of the third flow path is controlled to connect with the first end of the fourth flow path by the first flow path switching device, the first end of the third flow path is controlled to connect with the second end of the fifth flow path and the second end of the fourth flow path is controlled to connect with the first end of the sixth flow path by the second flow path switching device, and the first end of the fifth flow path is controlled to connect with the second end of the sixth flow path and the second end of the first flow path is controlled to connect with the first end of the second flow path by the third flow path switching device, so that the cooling fluid is outputted to the engine heat-dissipation device and the motor heat-dissipation device by the motor cooling circuit for heat-dissipation.

8. The circulation system of the range-extended electric bus according to claim 1, wherein the engine cooling circuit is a fuel battery or a heat pump.

9. The circulation system of the range-extended electric bus according to claim 1, wherein the engine cooling circuit is a fossil fuel boiler.

10. The circulation system of the range-extended electric bus according to claim 9, wherein the engine heat-dissipation device is a bypass pipe.

## Patentansprüche

1. Zirkulationssystem (1) eines Reichweitenerweiterten elektrischen Busses, umfassend:
Kühlflüssigkeit;
**gekennzeichnet durch**
einen ersten Strömungsweg (21), der einen Abteilungswärmetauscher (211) umfasst, wobei der Abteilungswärmetauscher zum Einstellen der Temperatur innerhalb eines Abteils verwendet wird, ein erstes Ende (21a) des ersten Strömungsweges mit einem ersten Ende des Abteilungswärmetauschers (221a) verbunden ist und ein zweites Ende (21b) des ersten Strömungsweges mit einem zweiten Ende (221b) des Abteilungswärmetauschers verbunden ist;
einen zweiten Strömungsweg (22), der eine Flüssigkeitstemperatur-Einstellvorrichtung (221) und eine erste Pumpe (222) umfasst, wobei die Flüssigkeitstemperatur-Einstellvorrichtung zum Steuern der Temperatur der Kühlflüssigkeit verwendet wird, das von der Flüssigkeitstemperatur-Einstellvorrichtung ausgegeben wird, und die erste Pumpe zum Steuern der Durchflussrate des Kühlflüssigkeit verwendet wird, das von der Flüssigkeltstemperatureinstellvorrichtung ausgegeben wird, und wobei ein erstes Ende (22a) des zweiten Strömungsweges mit einem ersten Ende (221a) der Flüssigkeitstemperatureinstellvorrichtung verbunden ist, ein zweites Ende (221b) der Flüssigkeitstemperatureinstellvorrichtung mit einem ersten Ende (222a) der ersten Pumpe verbunden ist und ein zweites Ende (222b) der ersten Pumpe mit einem zweiten Ende (22b) des zweiten Strömungsweges verbunden ist;
einen dritten Strömungsweg (23), der einen Maschinenkreislauf (231) und eine zweite Pumpe (232) umfasst, wobei der Maschinenkühlkreislauf zum Steuern der Temperatur der aus dem Maschinenkühlkreislauf abgegebenen Kühlflüssigkeit verwendet wird, und die zweite Pumpe zum Steuern der Flussrate der aus dem Motorkühlkreislauf abgegebenen Kühlflüssigkeit verwendet wird, und wobei ein erstes Ende (23a) des dritten Strömungsweges mit einem ersten Ende (231a) des Maschinenkühlkreislaufs verbunden ist, ein zweites Ende (231b) des Maschinenkühlkreislaufs mit einem ersten Ende (232a) der zweiten Pumpe verbunden ist und ein zweites Ende (232b) der zweiten Pumpe mit einem zweiten Ende (23b) des dritten Strömungsweges verbunden ist;
einen vierten Strömungsweg (24), der eine Maschinenwärmeableitungsvorrichtung (241) umfasst, wobei die Maschinenwärmeableitungsvorrichtung zum Einstellen der Temperatur eine Maschinen verwendet wird, ein erstes Ende (241a) des vierten Strömungsweges (24) mit einem ersten Ende (241a) der Maschinenwärmeableitungsvorrichtung verbunden Ist und ein zweites Ende (24b) des vierten Strömungsweges (24) mit einem zweiten Ende (241b) der Maschinenwärmeableitungsvorrichtung verbunden ist;
einen fünften Strömungsweg (25), der einen Motorkühlkreislauf (251) und eine dritte Pumpe (252) umfasst, wobei der Motorkühlkreislauf zum Steuern der Temperatur der aus dem Motorkühlkreislauf abgegebenen Kühlflüssigkeit verwendet wird, und die dritte Pumpe zum Steuern der Flussrate des aus dem Motorkühlkreislauf abgegebenen Kühlflüssigkeit verwendet wird, und wobei ein erstes Ende (25a) des fünften Strömungsweges mit einem ersten Ende (251a) des Motorkühlkreislaufs verbunden ist, ein zweites Ende (251b) des Motorkühlkreislaufs mit einem ersten Ende (252a) der dritten Pumpe verbunden ist und ein zweites Ende (25b) des fünften Strömungsweges (25) mit einem zweiten Ende (252b) der dritten Pumpe verbunden ist;
einen sechsten Strömungsweg (26), der eine motorische Wärmeableitungsvorrichtung (261) umfasst, wobei die motorische Wärmeableitungsvorrichtung zum Einstellen der Temperatur eines Motors verwendet wird, ein erstes Ende (26a) des sechsten Strömungsweges (26) mit einem ersten Ende (261a) der motorischen Wärmeableitungsvorrichtung verbunden ist und ein zweites Ende (26b) des sechsten Strömungsweges mit einem zweiten Ende (261b) der motorischen Wärmeableitungsvorrichtung verbunden ist;
eine erste Strömungswegschaltvorrichtung (11), die mit dem ersten Ende des ersten Strömungsweges, dem zweiten Ende des zweiten Strömungsweges, dem zweiten Ende des dritten Strömungsweges und dem ersten Ende des vierten Strömungsweges verbunden ist, um das erste Ende des ersten Strömungsweges und das erste Ende des vierten Strömungsweges zu steuern, um jeweils das zweite Ende des zweiten Strömungsweges und das zweite Ende des dritten Strömungsweges zu verbinden;
eine zweite Strömungswegschaltvorrichtung (12), die mit dem ersten Ende des dritten Strömungsweges, dem zweiten Ende des vierten Strömungsweges, dem zweiten Ende des fünften Strömungsweges und dem ersten Ende des sechsten Strömungsweges verbunden ist, um das erste Ende des dritten Strömungsweges und das erste Ende des sechsten Strömungsweges jeweils mit dem zweiten Ende des vierten Strömungsweges und dem zweiten Ende des fünften Strömungsweges zu steuern und selektiv zu verbinden; und
eine dritte Strömungswegschaltvorrichtung (13), die mit dem ersten Ende des fünften Strömungsweges, dem zweiten Ende des sechsten Strömungsweges, dem zweiten Ende des ersten Strömungsweges und dem ersten Ende des zweiten Strömungsweges zum Steuern des ersten Endes des fünften Strömungsweges und dem ersten Ende des zweiten Strömungsweges verbunden ist, um jeweils das zweite Ende des sechsten Strömungsweges und das zweite Ende des ersten Strömungsweges zu steuern und selektiv mit diesem zu verbinden,
wobei Verbindungen des ersten Strömungsweges, des zweiten Strömungsweges, des dritten Strömungsweges, des vierten Strömungsweges, des fünften Strömungsweges und des sechsten Strömungsweges und eine Zirkulation der Kühlflüssigkeit durch die erste Strömungswegabschaltung, die zweite Strömungswegabschaltung und die dritte Strömungswegabschaltung gesteuert werden und dadurch in einer Vielzahl von Betriebsarten betrieben werden.

2. Das Zirkulationssystem (1) des reichweitenerweiterten elektrischen Busses nach Anspruch 1, wobei die Betriebsarten einen normalen Kühlmodus beinhalten und wobei im normalen Kühlmodus das erste Ende des ersten Strömungsweges gesteuert wird, um mit dem zweiten Ende des zweiten Strömungsweges verbunden zu werden, und das zweite Ende des dritten Strömungsweges gesteuert wird, um mit dem ersten Ende des vierten Strömungsweges durch die erste Strömungswegeschaltvorrichtung verbunden zu werden, das erste Ende des dritten Strömungsweges gesteuert wird, um mit dem zweiten Ende des vierten Strömungsweges verbunden zu werden, und das zweite Ende des fünften Strömungsweges gesteuert wird, um mit dem ersten Ende des sechsten Strömungsweges durch die zwelte Strömungswegaustauschvorrichtung verbunden zu werden, und das erste Ende des fünften Strömungsweges gesteuert wird, um mit dem zweiten Ende des sechsten Strömungsweges verbunden zu werden, und das zweite Ende des ersten Strömungsweges gesteuert wird, um mit dem ersten Ende des zweiten Strömungsweges durch die dritte Strömungswegaustauschvorrichtung verbunden zu werden.

3. Das Zirkulationssystem (1) des reichweitenerweiterten elektrischen Busses nach Anspruch 1, wobei die Betriebsarten einen Hilfskühlmodus beinhalten, und wobei im Hilfskühlmodus das erste Ende des ersten Strömungsweges gesteuert wird, um mit dem zweiten Ende des zweiten Strömungsweges verbunden zu werden, und das zweite Ende des dritten Strömungsweges gesteuert wird, um mit dem ersten Ende des vierten Strömungsweges durch die erste Strömungswegeschaltvorrichtung verbunden zu werden, das erste Ende des dritten Strömungsweges gesteuert wird, um mit dem zweiten Ende des vierten Strömungsweges verbunden zu werden, und das zweite Ende des fünften Strömungsweges gesteuert wird, um mit dem ersten Ende des sechsten Strömungsweges durch die zweite Strömungswegeschaltvorrichtung verbunden zu werden, und das erste Ende des zweiten Strömungsweges gesteuert wird, um mit dem zweiten Ende des sechsten Strömungsweges verbunden zu werden, und das zweite Ende des ersten Strömungsweges gesteuert wird, um mit dem ersten Ende des fünften Strömungsweges durch die dritte Strömungswegschaltvorrichtung verbunden zu werden, so dass das aus dem Motorkühlkreislauf ausgegebene Kühlmittel von der Flüssigkeitstemperatureinstellvorrichtung aufgenommen und gekühlt wird.

4. Das Zirkulationssystem (1) des reichweitenerweiterten elektrischen Busses nach Anspruch 1, wobei die Betriebsarten einen Niedertemperaturmodus beinhalten und wobei im Niedertemperaturmodus das erste Ende des ersten Strömungsweges so gesteuert wird, dass es mit dem zweiten Ende des dritten Strömungsweges verbunden Ist, und das zweite Ende des zweiten Strömungsweges so gesteuert wird, dass es mit dem ersten Ende des vierten Strömungsweges durch die erste Strömungswegschalteinrichtung verbunden ist, das erste Ende des dritten Strömungsweges gesteuert wird, um mit dem zweiten Ende des vierten Strömungsweges verbunden zu werden, und das zweite Ende des fünften Strömungsweges gesteuert wird, um mit dem ersten Ende des sechsten Strömungsweges durch die zweite Strömungswegeschaltvorrichtung verbunden zu werden, und das erste Ende des zweiten Strömungsweges gesteuert wird, um mit dem zweiten Ende des sechsten Strömungsweges verbunden zu werden, und das zweite Ende des ersten Strömungsweges gesteuert wird, um mit dem ersten Ende des fünften Strömungsweges durch die dritte Strömungswegschaltvorrichtung verbunden zu werden, so dass die aus dem Maschlnenrkühlkreislauf ausgegebene Kühlflüssigkeit durch den Abteilungswärmetauscher aufgenommen und gekühlt wird.

5. Das Zirkulationssystem (1) des reichweitenerweiterten elektrischen Busses nach Anspruch 1, wobei die Betriebsarten einen Hochtemperaturmodus beinhalten und wobei im Hochtemperaturmodus das erste Ende des ersten Strömungsweges so gesteuert wird, dass es mit dem zweiten Ende des dritten Strömungsweges verbunden ist, und das zweite Ende des zweiten Strömungsweges so gesteuert wird, dass es mit dem ersten Ende des vierten Strömungsweges durch die erste Strömungswegschalteinrichtung verbunden ist, das erste Ende des dritten Strömungsweges so gesteuert wird, dass es mit dem zweiten Ende des fünften Strömungsweges verbunden ist, und das zweite Ende des vierten Strömungsweges so gesteuert wird, dass es mit dem ersten Ende des sechsten Strömungsweges durch die zweite Strömungswegabschaltung verbunden ist, und das erste Ende des zweiten Strömungsweges gesteuert wird, um mit dem zweiten Ende des sechsten Strömungsweges verbunden zu werden, und das zweite Ende des ersten Strömungsweges gesteuert wird, um mit dem ersten Ende des fünften Strömungsweges durch die dritte Strömungswegeschaltvorrichtung verbunden zu werden, so dass eine Abwärme des Motorkühlkrelslaufs und des Maschinenkühlkreislaufs durch den Abteilungwärmetauscher abgeführt wird.

6. Das Zirkulationssystem (1) des reichweitenerweiterten elektrischen Busses nach Anspruch 1, wobei die Betriebsarten einen Mitteltemperaturmodus beinhalten, und wobei im Mitteltemperaturmodus das erste Ende des ersten Strömungsweges so gesteuert wird, dass es mit dem zweiten Ende des dritten Strömungsweges verbunden ist, und das zweite Ende des zweiten Strömungsweges so gesteuert wird, dass es mit dem ersten Ende des vierten Strömungsweges durch die erste Strömungswegschalteinrichtung verbunden ist, das erste Ende des dritten Strömungsweges so gesteuert wird, dass es mit dem zweiten Ende des fünften Strömungsweges verbunden ist, und das zweite Ende des vierten Strömungsweges so gesteuert wird, dass es mit dem ersten Ende des sechsten Strömungsweges durch die zweite Strömungswegabschaltung verbunden ist, und das erste Ende des fünften Strömungsweges gesteuert wird, um mit dem zweiten Ende des sechsten Strömungsweges verbunden zu werden, und das zweite Ende des ersten Strömungsweges gesteuert wird, um mit dem ersten Ende des zweiten Strömungsweges durch die dritte Strömungswegeschaltvorrichtung verbunden zu werden, so dass die Kühlflüssigkeit im Motorkühlkreislauf und im Maschinenkühlkreislauf im Abteilungswärmetauscher, in der Flüssigkeitstemperatureinstellvorrichtung, in der Maschinenwärmeableitvorrichtung und im Motorkühlkreislauf zirkuliert.

7. Das Zirkulationssystem (1) des reichweitenerweiterten elektrischen Busses nach Anspruch 1, wobei die Betriebsarten einen gemeinsamen Kühlmodus beinhalten, und wobei im gemeinsamen Kühlmodus das erste Ende des ersten Strömungsweges gesteuert wird, um mit dem zweiten Ende des zweiten Strömungsweges verbunden zu werden, und das zweite Ende des dritten Strömungsweges gesteuert wird, um mit dem ersten Ende des vierten Strömungsweges durch die erste Strömungswegeschaltvorrichtung verbunden zu werden, das erste Ende des dritten Strömungsweges so gesteuert wird, dass es mit dem zweiten Ende des fünften Strömungsweges verbunden wird, und das zweite Ende des vierten Strömungsweges so gesteuert wird, dass es mit dem ersten Ende des sechsten Strömungsweges durch die zweite Strömungswegabschaltung verbunden zu werden, und das erste Ende des fünften Strömungsweges gesteuert wird, um mit dem zweiten Ende des sechsten Strömungsweges verbunden zu werden, und das zweite Ende des ersten Strömungsweges gesteuert wird, um mit dem ersten Ende des zweiten Strömungsweges durch die dritte Strömungswegeschaltvorrichtung verbunden zu werden, so dass die Kühlflüssigkeit an die Maschinenwärmeableitungsvorrichtung und die Motorwärmeableitungsvorrichtung durch den Motorkühlkreislauf zur Wärmeableitung abgegeben wird.

8. Das Zirkulationssystem (1) des reichweitenerweiterten elektrischen Busses nach Anspruch 1, wobei der Maschinenkühlkreislauf eine Kraftstoffbatterie oder eine Wärmepumpe ist.

9. Das Zirkulationssystem (1) des reichweitenerweiterten elektrischen Busses nach Anspruch 1, wobei der Maschlnenkühlkreislauf ein Kessel für fossile Brennstoffe ist.

10. Das Zirkulationssystem (1) des reichweitenerweiterten elektrischen Busses nach Anspruch 9, wobei die Maschinenwärmeableltungsvorrichtung eine Bypassleitung ist.

## Revendications

1. Un système de circulation (1) d'un bus électrique à portée étendue, comprenant:
un fluide de refroidissement;
**caractérisé par**
un premier trajet d'écoulement (21) comprenant un échangeur de chaleur à compartiment (211), dans lequel l'échangeur de chaleur à compartiment est utilisé pour régler la température à l'intérieur d'un compartiment, une première extrémité (21a) du premier trajet d'écoulement étant connectée à une première extrémité de l'échangeur de chaleur à compartiment (221a) et une seconde extrémité (21b) de le premier trajet d'écoulement est connecté à une seconde extrémité (221b) de l'échangeur de chaleur à compartiments;
un second trajet d'écoulement (22) comprenant un dispositif de réglage de la température du liquide (221) et une première pompe (222), dans lequel le dispositif de réglage de la température du liquide est utilisé pour commander la température du fluide de refroidissement délivré par le dispositif de réglage de la température du liquide, et la première pompe est utilisée pour commander le débit du fluide de refroidissement délivré par le dispositif de réglage de la température du liquide, et dans lequel une première extrémité (22a) du second trajet d'écoulement est connectée à une première extrémité (221a) du dispositif de réglage de la température du liquide, une seconde extrémité (221b) du dispositif de réglage de la température du liquide est connectée à une première extrémité (222a) de la première pompe, et une seconde extrémité (222b) de la première pompe est connectée à une seconde extrémité (22b) du second trajet d'écoulement;
un troisième trajet d'écoulement (23) comprenant un circuit de refroidissement du moteur (231) et une seconde pompe (232), dans lequel le circuit de refroidissement du moteur est utilisé pour commander la température du fluide de refroidissement délivré par le circuit de refroidissement du moteur, et la seconde pompe est utilisée pour commander le débit du fluide de refroidissement sortant du circuit de refroidissement du moteur, et dans lequel une première extrémité (23a) du troisième trajet d'écoulement est connectée à une première extrémité (231a) du circuit de refroidissement du moteur, une seconde extrémité (231b) du circuit de refroidissement du moteur est connectée à une première extrémité (232a) de la seconde pompe, et une seconde extrémité (232b) de la seconde pompe est connectée à une seconde extrémité (23b) du troisième trajet d'écoulement;
un quatrième trajet d'écoulement (24) comprenant un dispositif de dissipation thermique (241) du moteur, dans lequel le dispositif de dissipation thermique du moteur est utilisé pour régler la température d'un moteur, une première extrémité (241a) du quatrième trajet d'écoulement (24) est connectée à une première extrémité (241a) du dispositif de dissipation thermique du moteur, et une seconde extrémité (24b) du quatrième trajet d'écoulement (24) est connectée à une seconde extrémité (241b) du dispositif de dissipation thermique du moteur;
un cinquième trajet d'écoulement (25) comprenant un circuit de refroidissement de moteur (251) et une troisième pompe (252), dans lequel le circuit de refroidissement de moteur est utilisé pour commander la température du fluide de refroidissement délivré par le circuit de refroidissement de moteur, et la troisième pompe est utilisée pour commander le débit du fluide de refroidissement sortant du circuit de refroidissement du moteur, et dans lequel une première extrémité (25a) du cinquième trajet d'écoulement est connectée à une première extrémité (251a) du circuit de refroidissement du moteur, une seconde extrémité (251b) du circuit de refroidissement du moteur est connectée à une première extrémité (252a) de la troisième pompe, et une seconde extrémité (25b) du cinquième trajet d'écoulement (25) est connectée à une seconde extrémité (252b) de la troisième pompe;
un sixième trajet d'écoulement (26) comprenant un dispositif de dissipation thermique du moteur (261), dans lequel le dispositif de dissipation thermique du moteur est utilisé pour ajuster la température d'un moteur, une première extrémité (26a) du sixième trajet d'écoulement (26) est connectée à une première extrémité (261a) du dispositif de dissipation thermique du moteur, et une seconde extrémité (26b) du sixième trajet d'écoulement est connectée à une seconde extrémité (261b) du dispositif de dissipation thermique du moteur;
un premier dispositif de commutation (11) de trajet d'écoulement connecté à la première extrémité du premier trajet d'écoulement, à la seconde extrémité du second trajet d'écoulement, à la seconde extrémité du troisième trajet d'écoulement et à la première extrémité du quatrième trajet d'écoulement pour commander la première extrémité du premier trajet d'écoulement et la première extrémité du quatrième trajet d'écoulement pour connecter respectivement et sélectivement la seconde extrémité du second trajet d'écoulement et la seconde extrémité du troisième trajet d'écoulement;
un second dispositif de commutation (12) de trajet d'écoulement connecté à la première extrémité du troisième trajet d'écoulement, à la deuxième extrémité du quatrième trajet d'écoulement, à la seconde extrémité du cinquième trajet d'écoulement et à la première extrémité du sixième trajet d'écoulement pour commander la première extrémité du troisième trajet d'écoulement et la première extrémité du sixième trajet d'écoulement pour se connecter respectivement et sélectivement à la seconde extrémité du quatrième trajet d'écoulement et à la seconde extrémité du cinquième trajet d'écoulement; et
un troisième dispositif de commutation (13) de trajet d'écoulement connecté à la première extrémité du cinquième trajet d'écoulement, à la seconde extrémité du sixième trajet d'écoulement, à la seconde extrémité du premier trajet d'écoulement et à la première extrémité du second trajet d'écoulement pour commander la première extrémité le cinquième trajet d'écoulement et la première extrémité du second trajet d'écoulement pour se connecter respectivement et sélectivement à la seconde extrémité du sixième trajet d'écoulement et à la seconde extrémité du premier trajet d'écoulement,
dans lequel les connexions du premier trajet d'écoulement, du second trajet d'écoulement, la troisième trajet d'écoulement, du quatrième trajet d'écoulement, du cinquième trajet d'écoulement et du sixième trajet d'écoulement ainsi que la circulation du fluide de refroidissement sont commandées par le premier dispositif de commutation de trajet d'écoulement, le second dispositif de commutation de trajet d'écoulement et le troisième dispositif de commutation de trajet d'écoulement, les faisant ainsi fonctionner suivant une pluralité de modes de fonctionnement.

2. Le système de circulation d'un bus électrique à portée étendue selon la revendication 1, dans lequel les modes de fonctionnement comprennent un mode de refroidissement normal, et dans lequel dans le mode de refroidissement normal, la première extrémité du premier trajet d'écoulement est commandée pour se connecter à la seconde extrémité du le second trajet d'écoulement et la seconde extrémité du troisième trajet d'écoulement est commandée pour se connecter à la première extrémité du quatrième trajet d'écoulement par le premier dispositif de commutation de trajet d'écoulement, la première extrémité du troisième trajet d'écoulement étant commandée pour se connecter à la seconde extrémité du quatrième trajet d'écoulement et la seconde extrémité du cinquième trajet d'écoulement est commandée pour se connecter à la première extrémité du sixième trajet d'écoulement par le second dispositif de commutation de trajet d'écoulement, et la première extrémité du cinquième trajet d'écoulement est commandée pour se connecter à la seconde extrémité du sixième trajet d'écoulement et la seconde extrémité du premier trajet d'écoulement est commandée pour se connecter à la première extrémité du second trajet d'écoulement par le troisième dispositif de commutation de trajet d'écoulement.

3. Le système de circulation d'un bus électrique à portée étendue selon la revendication 1, dans lequel les modes de fonctionnement comprennent un mode de refroidissement auxiliaire, et dans le mode de refroidissement auxiliaire, et dans lequel dans le mode de refroidissement auxiliaire, la première extrémité du premier trajet d'écoulement est commandée pour se connecter à la seconde extrémité du second trajet d'écoulement et la seconde extrémité du troisième trajet d'écoulement est commandée pour se connecter à la première extrémité du quatrième trajet d'écoulement par le premier dispositif de commutation de trajet d'écoulement, la première extrémité du troisième trajet d'écoulement étant commandée pour se connecter à la seconde extrémité du quatrième trajet d'écoulement et la seconde extrémité du cinquième trajet d'écoulement étant commandée pour se connecter à la première extrémité du sixième trajet d'écoulement par le second dispositif de commutation de trajet d'écoulement, et la première extrémité du second trajet d'écoulement est commandée pour se connecter à la seconde extrémité du sixième trajet d'écoulement et la seconde extrémité du premier trajet d'écoulement est commandée pour être connectée à la première extrémité du cinquième trajet d'écoulement par le troisième dispositif de commutation de trajet d'écoulement, de sorte que le fluide de refroidissement délivré par le circuit de refroidissement du moteur est reçu et refroidi par le dispositif de réglage de la température du liquide.

4. Le système de circulation d'un bus électrique à portée étendue selon la revendication 1, dans lequel les modes de fonctionnement comportent un mode à basse température, et dans lequel dans le mode à basse température, la première extrémité du premier trajet d'écoulement est commandée pour se connecter à la seconde extrémité du troisième trajet d'écoulement et la seconde extrémité du second trajet d'écoulement est commandée pour se connecter à la première extrémité du quatrième trajet d'écoulement par le premier dispositif de commutation de trajet d'écoulement, la première extrémité du troisième trajet d'écoulement étant commandée pour se connecter à la seconde extrémité du quatrième trajet d'écoulement et la seconde extrémité du cinquième trajet d'écoulement est commandée pour se connecter à la première extrémité du sixième trajet d'écoulement par le second dispositif de commutation de trajet d'écoulement, et la première extrémité du second trajet d'écoulement est commandée pour se connecter avec la seconde extrémité du sixième trajet d'écoulement et la seconde extrémité du premier trajet d'écoulement est commandée pour se connecter à la première extrémité du cinquième trajet d'écoulement par le troisième dispositif de commutation de trajet d'écoulement, de sorte que le fluide de refroidissement sorti du le circuit de refroidissement du moteur est reçu et refroidi par l'échangeur de chaleur du compartiment.

5. Le système de circulation du bus électrique à portée étendue selon la revendication 1, dans lequel les modes de fonctionnement comprennent un mode à haute température et dans lequel, dans le mode à haute température, la première extrémité du premier trajet d'écoulement est commandée pour se connecter à la seconde extrémité du troisième trajet d'écoulement et la seconde extrémité du second trajet d'écoulement est commandée pour se connecter à la première extrémité du quatrième trajet d'écoulement par le premier dispositif de commutation de trajet d'écoulement, la première extrémité du troisième trajet d'écoulement est commandée pour se connecter à la seconde extrémité du cinquième trajet d'écoulement et la seconde extrémité du quatrième trajet d'écoulement est commandée pour se connecter à la première extrémité du sixième trajet d'écoulement par le second dispositif de commutation de trajet d'écoulement, et la première extrémité du second trajet d'écoulement est commandée pour se connecter avec la seconde extrémité du sixième trajet d'écoulement et la seconde extrémité du premier trajet d'écoulement est commandés pour se connecter à la première extrémité du cinquième trajet d'écoulement par le troisième dispositif de commutation de trajet d'écoulement, de telle façon qu'une chaleur perdue du circuit de refroidissement de moteur et du circuit de refroidissement du moteur sont dissipée en chaleur part l'échangeur thermique du compartiment.

6. Le système de circulation d'un bus électrique à portée étendue selon la revendication 1, dans lequel les modes de fonctionnement comprennent un mode à température moyenne, et dans lequel, dans le mode à température moyenne, la première extrémité du premier trajet d'écoulement est commandée pour se connecter à la seconde extrémité du troisième trajet d'écoulement et la seconde extrémité du second trajet d'écoulement est commandée pour se connecter à la première extrémité du quatrième trajet d'écoulement par le premier dispositif de commutation de trajet d'écoulement, la première extrémité du troisième trajet d'écoulement étant commandée pour se connecter à la seconde extrémité du cinquième trajet d'écoulement et la seconde extrémité du quatrième trajet d'écoulement est commandée pour se connecter à la première extrémité du sixième trajet d'écoulement par le second dispositif de commutation de trajet d'écoulement, et la première extrémité du cinquième trajet d'écoulement est commandée pour se connecter avec la deuxième extrémité du sixième trajet d'écoulement et la seconde extrémité du premier trajet d'écoulement est commandés pour se connecter à la première extrémité du second trajet d'écoulement par le troisième dispositif de commutation de trajet d'écoulement, de sorte que le fluide de refroidissement dans le circuit de refroidissement de moteur et le circuit de refroidissement moteur circulent dans l'échangeur de chaleur du compartiment, le dispositif de réglage de la température du liquide, le dispositif de dissipation thermique du moteur et le circuit de refroidissement du moteur.

7. Le système de circulation d'un bus électrique à portée étendue selon la revendication 1, dans lequel les modes de fonctionnement comprennent un mode de refroidissement commun, et dans le mode de refroidissement commun, la première extrémité du premier chemin d' écoulement est commandée pour se connecter à la seconde extrémité du second trajet d'écoulement et la seconde extrémité du troisième trajet d'écoulement est commandée pour se connecter à la première extrémité du quatrième trajet d'écoulement par le premier dispositif de commutation de trajet d'écoulement, la première extrémité du troisième trajet d'écoulement étant commandée pour se connecter à la seconde extrémité du cinquième trajet d'écoulement et la seconde extrémité du quatrième trajet d'écoulement est commandée pour se connecter à la première extrémité du sixième trajet d'écoulement par le second dispositif de commutation de trajet d'écoulement, et la première extrémité du cinquième trajet d'écoulement est commandée pour se connecter à la seconde extrémité du sixième trajet d'écoulement et la seconde extrémité du premier trajet d'écoulement est commandée pour être connectée à la première extrémité du second trajet d'écoulement par le troisième dispositif de commutation du trajet d'écoulement, de telle façon que le fluide de refroidissement est délivré vers le dispositif de dissipation thermique moteur et le circuit de dissipation thermique du moteur par le circuit de refroidissement moteur pour dissiper la chaleur.

8. Le système de circulation d'un bus électrique à portée étendue selon la revendication 1, dans lequel le circuit de refroidissement du moteur est une batterie à combustible ou une pompe à chaleur.

9. Le système de circulation d'un bus électrique à portée étendue selon la revendication 1, dans lequel le circuit de refroidissement du moteur est une chaudière à combustible fossile.

10. Le système de circulation d'un bus électrique à portée étendue selon la revendication 9, dans lequel le dispositif de dissipation thermique du moteur est un tuyau de dérivation.
